# EUROPÄISCHE PATENTSCHRIFT

(11) **EP 3 860 884 B1**
(45) Veröffentlichungstag und Bekanntmachung des Hinweises auf die Patenterteilung: **04.12.2024**
(21) Anmeldenummer: 19770003.2
(22) Anmeldetag: 10.09.2019
(51) Int. Cl.: B60R 21/217, B60R 21/261, B60R 21/262

(54) **BAUGRUPPE AUS EINEM DIFFUSOR UND EINEM GASGENERATOR, GASSACKMODUL UND VERFAHREN ZUR MONTAGE EINER BAUGRUPPE**
ASSEMBLY COMPRISING A DIFFUSER AND A GAS GENERATOR, AIRBAG MODULE AND METHOD FOR INSTALLING AN ASSEMBLY
ENSEMBLE CONSTITUÉ D'UN DIFFUSEUR ET D'UN GÉNÉRATEUR DE GAZ, MODULE DE SAC GONFLABLE ET PROCÉDÉ DE MONTAGE D'UN ENSEMBLE

(30) Priorität: 02.10.2018 DE 102018124300; 08.01.2019 DE 102019100262
(43) Veröffentlichungstag der Anmeldung: 11.08.2021
(73) Patentinhaber: ZF Automotive Germany GmbH, 73553 Alfdorf (DE)
(72) Erfinder: DISAM, Robert, 73557 Mutlangen (DE); FISCHER, Anton, 73579 Schechingen-Leinweiler (DE)
(74) Vertreter: ZF LIFETEC Intellectual Property
(86) Internationale Anmeldenummer: PCT/EP2019/074079
(87) Internationale Veröffentlichungsnummer: WO 2020/069823

(56) Entgegenhaltungen:
- DE-A1- 102006 048 525
- DE-A1- 102008 029 903
- DE-A1- 19 850 448
- DE-B3- 102004 022 732
- DE-T5- 112004 001 700
- DE-U1- 29 907 617
- US-A1- 2003 094 798

## Beschreibung

Die Erfindung betrifft eine Baugruppe aus einem langgestreckten Gasgenerator und einem schellenförmigen Diffusor, der einen Ausströmbereich des Gasgenerators umschließt. Außerdem betrifft die Erfindung ein Gassackmodul mit einer derartigen Baugruppe sowie Verfahren zur Montage einer derartigen Baugruppe.

Bei langgestreckten Gasgeneratoren, die auch als Rohrgasgeneratoren bezeichnet werden, ist in der Regel der Ausströmbereich durch eine Vielzahl von über den Umfang eines Außengehäuses des Gasgenerators verteilten Ausströmöffnungen gebildet. Oft sind die Ausströmöffnungen in einem Filtergehäuse an einem axialen Ende des Gasgenerators vorgesehen. Das Gas strömt daher aus dem Gasgenerator in Radialrichtung ab. Um den Gasgenerator bei dessen Aktivierung schubneutral zu halten, sind die Ausströmöffnungen oft gleichmäßig um den Umfang verteilt.

Bei vielen Gassackmodulen ist der Gasgenerator so angeordnet, dass sein Ausströmbereich im Inneren des aufblasbaren Volumens des Gassacks liegt. Dieses Design findet sich beispielsweise bei vorhangartigen Seitengassäcken oder auch bei Seitengassäcken, die in einer Rückenlehne eines Fahrzeugsitzes verbaut sind.

Der Gassack muss vor dem aus dem Gasgenerator austretenden Gasstrom geschützt werden. Hierzu ist es beispielsweise bekannt, eine spezielle Gewebelage vorzusehen, die den Ausströmbereich des Gasgenerators in Umfangsrichtung umgibt und die sowohl das Gassackgewebe schützt als auch den Gasstrom in Axialrichtung umlenkt. Eine axial gerichtete Ausströmung hat den Vorteil, dass das Gas besser im Gassacks verteilt werden kann.

Es ist außerdem bekannt, eine sogenannte Gaslanze vorzusehen, die als Hauptkomponente ein an beiden Enden offenes Rohrstück aufweist und die axial an einen Gasgenerator angesetzt wird, um das ausströmende Gas über eine Distanz von mehreren Dezimetern zu einem entfernt vom Gasgenerator angeordneten Gassack zu überführen. So lässt sich zwar ein gerichteter Gasstrom in den Gassack erzeugen, jedoch ist es nicht möglich, den Ausströmbereich des Gasgenerators unmittelbar im Gassack anzuordnen, wodurch sich unweigerlich die Abmessung des Gassackmoduls vergrößert.

Aus dem Dokument DE 11 2009 004 386 B4 ist ein Baugruppe aus einem Gasgenerator und einem Diffusor bekannt, die den aus dem Gasgenerator austretenden Gasstrom aufteilt.

Aufgabe der Erfindung ist es, eine Möglichkeit zu schaffen, um das aus dem Gasgenerator ausströmende Gas in den Gassack zu leiten, bei kleinem Baumaß, guten Anpassungsmöglichkeiten an unterschiedliche Geometrien und mit geringen Fertigungskosten.

Diese Aufgabe wird mit einer Baugruppe mit den Merkmalen des Anspruchs 1 gelöst. Die erfindungsgemäße Baugruppe besteht aus einem langgestreckten Gasgenerator, der ein Außengehäuse mit am Umfang verteilten Ausströmöffnungen hat, die einen Ausströmbereich und eine Ausströmrichtung definieren, und aus einem schellenförmigen, den Ausströmbereich umschließenden Diffusor, wobei der Diffusor eine zentrale Aufnahmeöffnung aufweist, in die das Außengehäuse des Gasgenerators hineinragt, sodass der Diffusor einen axialen Abschnitt des Außengehäuses, welcher den Ausströmbereich umfasst, umfangsmäßig umschließt. An der die Aufnahmeöffnung begrenzenden Innenseite des Diffusors sind zumindest eine Anlagefläche und zumindest eine Gasleitfläche vorgesehen, wobei die Anlagefläche direkt am Außengehäuse anliegt und die Gasleitfläche radial vom Außengehäuse unter Bildung zumindest zwei Sammelkammern beabstandet ist, in die aus dem Ausströmbereich ausströmendes Gas einströmt. Die Sammelkammern münden jeweils in wenigstens eine Auslassöffnung, durch die Gas den Diffusor in einer Auslassrichtung quer zur Ausströmrichtung aus dem Gasgenerator verlässt.

Der Diffusor lenkt gleichzeitig das aus dem Gasgenerator ausströmende Gas in eine oder mehrere gewünschte Richtungen um und schützt die Umgebung vor einem direkten Kontakt mit dem ausströmenden Gas. Da der Diffusor den Ausströmbereich des Gasgenerators unmittelbar umgibt, kann er mit kleinen Abmessungen gefertigt werden.

Der Diffusor lässt sich einfach so ausbilden, dass im Wesentlichen sämtliches aus dem Gasgenerator ausströmende Gas in zumindest zwei Sammelkammern einströmt.

Vorzugsweise ist der Diffusor ein umgeformter Blechring. Er kann beispielsweise als Stanz-Biegeteil realisiert sein. Dieses Herstellungsverfahren erlaubt es, den Diffusor auf einfache Weise für verschiedene Gasgenerator- und Gassackgeometrien auszulegen und beispielsweise an eine axiale Länge des Ausströmbereichs des Gasgenerators oder einen Durchmesser des Gasgenerators anzupassen sowie die gewünschte Anzahl, Lage, Position und/oder Richtung der Auslassöffnungen vorzugeben. Alternativ kann der Diffusor aus einem Rohrelement, insbesondere einem Stahlrohr hergestellt werden.

Um den benötigten Bauraum nach Möglichkeit zu reduzieren, sollte der Diffusor in axialer Richtung so kurz ausgebildet sein, dass er maximal unwesentlich über das axiale Ende des Gasgenerators übersteht und somit die axiale Länge der Baugruppe im Wesentlichen der axialen Länge des Gasgenerators entspricht.

Der Diffusor kann sich in axialer Richtung vollständig über den Ausströmbereich des Gasgenerators erstrecken, sodass das gesamte ausströmende Gas zunächst in den Diffusor gelangt.

In dieser Anmeldung wird der Begriff der "axialen Länge" oder der "Axialrichtung" stets mit Bezug auf die Längsachse des Gasgenerators verwendet.

Die Auslassrichtung aus dem Diffusor verläuft vorzugsweise axial bezogen auf die Längsachse des Gasgenerators, also parallel zu dessen Längsachse. Das aus dem Ausströmbereich des Gasgenerators ausströmende Gas wird dabei in etwa um 90° quer zu seiner Ausströmrichtung umgelenkt.

Erfindungsgemäß sind zumindest zwei Auslassöffnungen vorgesehen, die entgegengesetzt gerichtet sind. Das Gas verlässt den Diffusor in diesem Fall in zwei entgegengesetzten, aber jeweils entlang der Axialrichtung weisenden Richtungen. Dies ermöglicht eine schnellere Verteilung des Gases im Gassack und kann den Gasgenerator im Wesentlichen oder sogar komplett schubneutral halten.

Das Volumen der Sammelkammer sowie die Fläche der Auslassöffnungen lassen sich so wählen, dass sich im Wesentlichen gegenüber dem aus dem Ausströmbereich austretenden Gas kein zu hoher Überdruck im Diffusor ausbildet.

Die beiden Auslassöffnungen können sich entlang der Axialrichtung gegenüberliegen. Die Fläche beider Auslassöffnungen kann gleich groß oder unterschiedlich groß gewählt sein. Generell liegt die Wahl der Anzahl, Fläche, und Position der Auslassöffnungen im Ermessen des Fachmanns.

Abhängig von der Geometrie des zu befüllenden Gassacks können auch beispielsweise zwei entgegengesetzt gerichtete Auslassöffnungen vorgesehen sein, die in Umfangsrichtung voneinander beabstandet sind.

Die Auslassöffnungen können auf einfache Weise im Diffusor realisiert werden, indem angrenzend an die Auslassöffnungen die Gasleitfläche radial weiter außen liegt als in der zumindest einen zugeordneten Sammelkammer entfernt von den Auslassöffnungen. Anders betrachtet weitet sich die Sammelkammer beim Übergang in die Auslassöffnung in radialer Richtung auf, sodass insbesondere in einem radialen Schnitt die Auslassöffnung eine größere Fläche einnimmt als die Sammelkammer und das Gas ohne erhöhten Widerstand aus dem Diffusor ausströmen kann.

Im Bereich der Auslassöffnungen können beispielsweise sowohl die Gasleitfläche als auch die Anlagefläche radial vom Außenumfang des Gasgenerators beabstandet sein, sodass eine in axialer Richtung durchgehende Öffnung durch den gesamten Diffusor gebildet ist, die an beiden Enden offen ist, wobei die beiden offenen Enden die Auslassöffnungen definieren.

Generell lassen sich über die Anlagenfläche(n) die Sammelkammer(n) in axialer Richtung und/oder in Umfangsrichtung begrenzen, wobei eine geeignete Wahl des Verlaufs der Anlageflächen eine beliebige Geometrie einer oder mehrerer Sammelkammern ermöglicht. Weitere Leitelemente für das ausströmende Gas sind dabei nicht erforderlich. Die Anlageflächen können grundsätzlich komplett voneinander beabstandet sein oder auch abschnittsweise ineinander übergehen.

In einer möglichen Ausführungsform ist der Diffusor so ausgebildet, dass zumindest eine Sammelkammer vorgesehen ist, die in Umfangsrichtung nicht durchgehend verläuft und die an ihren beiden Umfangsenden in zumindest eine Auslassöffnung mündet. Die Sammelkammer kann sich beispielsweise über einen Winkelabschnitt von etwa 200° bis 350° und insbesondere von 220° bis 270° erstrecken.

Es können zwei oder mehr in Umfangsrichtung voneinander getrennte Sammelkammern vorgesehen sein, die jeweils in zumindest eine Auslassöffnung münden. Es ist dabei auch denkbar, dass eine Auslassöffnung mehreren Sammelkammern zugeordnet ist.

In einer anderen möglichen Ausführungsform ist eine Sammelkammer vorgesehen, die an einem axialen Ende in eine Auslassöffnung mündet. In diesem Fall muss das Gas nicht erst entlang der Umfangsrichtung geleitet werden, sondern kann von der Gasleitfläche direkt in Axialrichtung umgelenkt werden.

Die Auslassöffnung kann beispielsweise durch einen radialen Spalt zwischen dem Außengehäuse und der Innenseite des Diffusors gebildet sein, was die Fertigung des Diffusors vereinfacht. Die radiale Ausdehnung des Diffusors lässt sich bei dieser Ausführung auf den radialen Abstand der Gasleitfläche von der Außenwand des Gasgenerators begrenzen. Insbesondere kann die Auslassöffnung zwischen der Innenseite der Gasleitfläche und der Außenkontur des Gasgenerators durch einen axial geöffneten Schlitz gebildet sein.

Die beiden gerade beschriebenen Ausführungsformen lassen sich natürlich auch kombinieren, sodass der Diffusor sowohl zumindest eine in Umfangsrichtung in eine Auslassöffnung mündende als auch zumindest eine in Axialrichtung in eine Auslassöffnung mündende Sammelkammer aufweist.

Die wenigstens eine Anlagefläche lässt sich dazu nutzen, den aus dem Generator austretenden Gasstrom in zumindest zwei Teilströme aufzuteilen. Durch den Verlauf der Anlagefläche kann auf einfache Weise die Anzahl der unterhalb der Gasleitfläche liegenden Ausströmöffnungen des Gasgenerators festgelegt werden, die wiederum den Anteil des gesamten Füllgases bestimmen, der in den jeweiligen Teilstrom gelangt und über die jeweilige Gasleitfläche zu einer der Auslassöffnungen geleitet wird. Vorzugsweise werden die einzelnen Teilströme in unterschiedliche Sammelkammern und von dort zu unterschiedlichen Auslassöffnungen geleitet.

In einer möglichen Ausführungsform verläuft die Anlagefläche nur in Umfangsrichtung um das Außengehäuse.

In einer anderen möglichen Ausführungsform verläuft die Anlagefläche wendelförmig um das Außengehäuse.

Eine besonders einfache auszubildende Form einer Anlagefläche, mit der sich Teilgasströme mit unterschiedlichen Gasmengen erzeugen lassen, sieht vor, das bei einer um den gesamten Umfang des Gasgenerators umlaufenden Anlagefläche zwei nur in Umfangsrichtung verlaufende erste Abschnitte und zwei schräg zu Umfangsrichtung und zur Axialrichtung verlaufende zweite Abschnitte vorgesehen sind, wobei die zweiten Abschnitte die ersten Abschnitte verbinden. Vorzugsweise trennt die Anlagefläche zwei in Axialrichtung getrennte Sammelkammer mit jeweils zumindest einer eigenen Auslassöffnung. Die Wahl der Länge und Neigung der schräg zur Axialrichtung verlaufenden zweiten Abschnitte bestimmt die Anzahl der Ausströmöffnungen, die den jeweiligen Teilgasstrom mit Gas beliefern.

In einer weiteren Ausführungsform können mehrere Auslassöffnungen über den Umfang verteilt angeordnet sein. Vorzugsweise sind die Auslassöffnungen durch Trennstege getrennt, die zumindest teilweise die Anlageflächen des Diffusors bilden, die die Sammelkammer in axialer Richtung begrenzen. Derartige über den Umfang verteilt angeordnete Auslassöffnungen, die die Anlagefläche über den Umfang verteilt unterbrechen, sind insbesondere vorderseitig am Diffusor und somit im montierten Zustand des Diffusors hin zu einem Längsende des Gasgenerators angeordnet.

Der Diffusor der Baugruppe kann zur Anbringung und Befestigung an dem Gasgenerator zumindest ein Rastelement umfassen. Vorzugsweise umfasst der Diffusor in einer derartigen Ausführungsform zwei oder mehrere Rastelemente.

Das Rastelement ist derart ausgebildet, dass es zur Befestigung und Festlegung des Diffusors auf dem Gasgenerator in eine Sicke eingreifen kann. Durch das Verrasten wird der Diffusor über eine formschlüssige Verbindung auf dem Gasgenerator fixiert. Durch die Rastelemente kann der Diffusor an dem Gasgenerator auf einfache Art befestigt werden. Zusätzlich besteht dennoch die Möglichkeit den Diffusor durch Verpressen oder Verschweißen zusätzlich an dem Gasgenerator zu befestigen.

In einer Ausführungsform ist das Rastelement im Anschluss an eine Anlagefläche des Diffusors angeordnet. Ein derartiger Diffusor mit einem oder mehreren Rastelementen kann vorzugsweise aus einem Federstahl, insbesondere einem zwischenstufenvergüteten Federstahl, hergestellt werden.

Normalerweise ist der Ausströmbereich an einem axialen Ende des Gasgenerators vorgesehen, sodass auch der Diffusor an einem axialen Ende des Gasgenerators angeordnet ist.

Erfindungsgemäß ist der Ausströmbereich des Gasgenerators in zumindest zwei Zonen unterteilt, die durch einen Trennbereich des Außengehäuses ohne Ausströmöffnungen voneinander getrennt sind. Die Zonen mit den Ausströmöffnungen sind vorzugsweise als axiale Zonen mit jeweils über den Umfang verteilten Ausströmöffnungen ausgebildet.

Erfindungsgemäß ist bei der Baugruppe eine Anlagefläche des Diffusors in dem Trennbereich zwischen den Zonen positioniert. Die in dem Trennbereich positionierte Anlagefläche teilt das Gas, das aus den beiden Zonen austritt, in zwei separate Teilgasströme auf. Vorzugsweise weist der Diffusor dabei zwei Sammelkammern auf, die benachbart der in dem Trennbereich positionierten Anlagefläche angeordnet sind und jeweils eine Sammelkammer das aus einer der beiden Zonen austretende Gas auffängt.

Die in Axialrichtung rückseitige Sammelkammer hat in einer derartigen Ausführungsform beispielweise eine Auslassöffnung, die durch einen offenen Abschnitt in einer rückwärtig weisenden Seitenwand des Diffusors gebildet ist. Aus dieser kann ein Teilgasstrom in einer Auslassrichtung austreten, die vom Längsende des Gasgenerators weg gerichtet ist.

Die in Axialrichtung vorderseitige Sammelkammer hat in einer derartigen Ausführungsform beispielweise eine umfangsmäßig umlaufende Auslassöffnung in Form eines radialen Spalts. Aus dieser kann ein Teilgasstrom in der entgegengesetzten Richtung gegenüber dem aus der rückseitigen Sammelkammer austretenden Teilgasstrom austreten.

Die Zonen des Ausströmbereichs des Gasgenerators können eine symmetrische Aufteilung der Ausströmöffnungen aufweisen. Dadurch kann die Baugruppe schubneutral bezüglich des aus dem Gasgenerator ausströmenden Gas ausgebildet werden, sodass jeweils 50% des Gases über die Auslassöffnung der in Axialrichtung vorderseitige und der in Axialrichtung rückseitigen Sammelkammer austreten.

Alternativ können die Zonen des Ausströmbereichs des Gasgenerators auch eine nicht symmetrische Aufteilung der Ausströmöffnungen aufweisen, wodurch eine ungleichmäßige Verteilung des Gasstroms entsteht. Durch eine derartige prozentual ungleichmäßige Aufteilung des Gasstroms beispielweise eine im Wesentlichen gleichmäßige Befüllung von unterschiedlich großen, vorder- und rückseitig angeordneten Gassackkammern erreicht werden.

Ein wesentlicher Vorteil einer derartigen Baugruppe ist, dass der Diffusor als ein Standardbauteil ausgelegt werden kann und eine Anpassung der prozentualen Gasverteilung auf einfache Weise durch eine Anpassung der Anzahl, der den jeweiligen Zonen zugeordneten Ausströmöffnungen in dem Ausströmbereich des Gasgenerators angepasst werden kann.

Die genannte Aufgabe wird auch mit einem Gassackmodul mit einem Gassack und einer oben beschriebenen Baugruppe gelöst, bei der der Diffusor vollständig in einem aufblasbaren Innenvolumen des Gassacks angeordnet ist.

In diesem Fall ist es nicht notwendig, die Anlageflächen vollständig gegenüber der Außenfläche des Gasgenerators abzudichten, da eventuelle Leckströme innerhalb des Gassacks austreten und somit nicht in die Umgebung gelangen können. Daher kann auf aufwändige Dichtungen verzichtet werden, was die Herstellungskosten weiter senkt.

Um eine oben genannte Baugruppe zu montieren, ist ein Verfahren nach Anspruch 14 mit den folgenden Schritten vorgesehen. Ein einstückiger Diffusor wird aus einem Rohrelement oder aus einem Metallblech gefertigt, wobei alle Anlageflächen und alle Gasleitflächen vorgeformt werden. Der so vorgefertigte Diffusor wird auf den Ausströmbereich des Gasgenerators geschoben. Zur Befestigung des Diffusors an dem Gasgenerator wird eine Anlagefläche des Diffusors im Bereich einer Sicke des Gasgenerators plastisch verformt, sodass die Anlagefläche zumindest teilweise oder abschnittsweise entlang des Umfangs in die Sicke eingreift und eine formschlüssige Verbindung entsteht. Die plastische Verformung der Anlagefläche im Bereich der Sicke kann vorzugsweise durch ein Presswerkzeug erzeugt werden.

Alternativ kann zur Montage einer oben genannte Baugruppe ein Verfahren nach Anspruch 15 mit den folgenden Schritten vorgesehen sein. Ein einstückiger Diffusor wird aus einem geschlossenen Rohrelement oder aus einem Metallblech gefertigt, wobei alle Anlageflächen, alle Gasleitflächen und alle Rastelemente vorgeformt werden. Der Diffusor wird auf den Ausströmbereich des Gasgenerators geschoben, sodass die Rastelemente zumindest abschnittsweise entlang des Umfangs in die Sicke des Gasgenerators eingreifen und eine formschlüssige Verrastung entsteht. Beim Aufschieben des Diffusors biegen sich die Anlageflächen mit daran anschließenden Rastelementen radial nach außen. Bei Erreichen der Sicken des Gasgenerators rasten die Rastelemente in die Sicken des Gasgenerators ein, sodass die formschlüssige Verrastung/Verriegelung des Diffusors an dem Gasgenerator erreicht werden kann.

Eine direkte Befestigung des Diffusors an der Außenwand des Gasgenerators außer durch Klemmen und/oder Aufpressen ist nicht erforderlich und somit in der Regel nicht vorgesehen, aber dennoch möglich.

Durch diese Art der Fertigung ist die Verwendung eines erfindungsgemäßen Diffusors unabhängig von der Außenkontur des Gasgenerators entlang dessen Längsachse.

Als Material wird vorzugsweise ein Stahlblech oder ein Stahlrohr eingesetzt. Insbesondere bei einem Diffusor mit einem Rastelement kann zudem ein Federstahl, insbesondere ein zwischenstufenvergüteter Federstahl, eingesetzt werden.

Die Erfindung wird nachfolgend anhand mehrerer Ausführungsbeispiele und mit Bezug auf die beigefügten Zeichnungen näher beschrieben. In den Zeichnungen zeigen:
- Figur 1 eine schematische perspektivische Ansicht eines Längsendes eines Gasgenerators einer erfindungsgemäßen Baugruppe;
- Figur 2 eine schematische perspektivische Ansicht einer erfindungsgemäßen Baugruppe aus einem Gasgenerator und einem Diffusor gemäß einer ersten Ausführungsform;
- Figur 3 den Diffusor aus Figur 2 in einer frontalen Ansicht;
- Figur 4 ein erfindungsgemäßes Gassackmodul mit einer Baugruppe aus Figur 2 in einer Längsschnittansicht;
- Figur 5 eine schematische perspektivische Ansicht einer erfindungsgemäßen Baugruppe aus einem Gasgenerator und einem Diffusor gemäß einer zweiten Ausführungsform;
- Figur 6 eine schematische perspektivische Ansicht des Diffusors aus Figur 5;
- Figur 7 eine schematische perspektivische Ansicht einer erfindungsgemäßen Baugruppe aus einem Gasgenerator und einem Diffusor gemäß einer dritten Ausführungsform;
- Figur 8 den Diffusor aus Figur 7 in einer rückseitigen Ansicht;
- Figur 9 eine schematische perspektivische Ansicht eines Längsendes eines Gasgenerators einer erfindungsgemäßen Baugruppe;
- Figur 10 eine schematische perspektivische Ansicht einer erfindungsgemäßen Baugruppe aus einem Gasgenerator und einem Diffusor gemäß einer vierten Ausführungsform;
- Figur 11 eine schematische Längsschnittansicht der Baugruppe aus Figur 10;
- Figur 12 a) bis c) schematische Ansichten verschiedener Ausführungsformen eines Längsendes eines Gasgenerators einer erfindungsgemäßen Baugruppe;
- Figur 13 a) bis c) teilweise geschnitten dargestellte Ansichten einer erfindungsgemäßen Baugruppe eines Gasgenerators mit einem Diffusor gemäß einer fünften Ausführungsform;
- Figur 14 eine schematische perspektivische Ansicht des Diffusors aus Figur 13;
- Figur 15 eine schematische perspektivische Ansicht einer erfindungsgemäßen Baugruppe aus einem Gasgenerator und einem Diffusor gemäß einer sechsten Ausführungsform;
- Figur 16 eine schematische perspektivische Ansicht einer erfindungsgemäßen Baugruppe aus einem Gasgenerator und einem Diffusor gemäße einer siebten Ausführungsform;
- Figur 17 a) und b) vergrößerte Teilansichten auf ein vorderes Längsende des Gasgenerators mit dem Diffusor gemäß Figur 16 in einer perspektivischen a) rückseitigen und b) vorderseitigen Ansicht;
- Figur 18 den Diffusor aus Figur 16 in einer perspektivischen vorderseitigen Ansicht;
- Figur 19 einen ersten schematischen Längsschnitt der Baugruppe aus Figur 16;
- Figur 20 einen zweiten schematischen Längsschnitt der Baugruppe aus Figur 16 während eines Montageschritts des Diffusors; und
- Figur 21 den zweiten schematischen Längsschnitt der Baugruppe aus Figur 16 nach einer Beendigung der Montage des Diffusors.

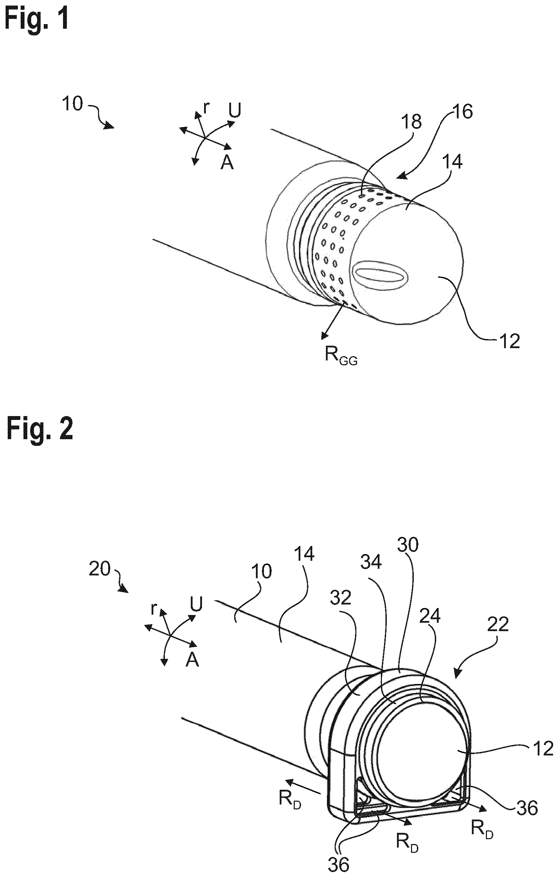

Figur 1 zeigt einen langgestreckten Gasgenerator 10, der an einem Längsende 12 seines Außengehäuses 14 einen Ausströmbereich 16 mit einer Vielzahl von einzelnen, über den Umfang verteilten Ausströmöffnungen 18 hat. Die Ausströmöffnungen 18 sind in diesem Fall in einem Filtergehäuse des Gasgenerators 10 gebildet, das Teil des Außengehäuses 14 des Gasgenerators 10 ist.

Die Ausströmöffnungen 18 sind hier gleichmäßig entlang der Umfangsrichtung U verteilt. An einer das Längsende 12 abschließenden Kappe sind keine Ausströmöffnungen 18 vorgesehen. Wird der Gasgenerator 10 aktiviert, so strömt das gesamte erzeugte Gas durch die Ausströmöffnungen 18 des Ausströmbereichs 16 in einer in Radialrichtung r verlaufenden Ausströmrichtung R_{GG} ab.

In der in Figur 2 gezeigten ersten Ausführungsform einer Baugruppe 20 ist der Ausströmbereich 16 des Gasgenerators 10 von einem schellenförmigen Diffusor 22 in Umfangsrichtung U umgeben.

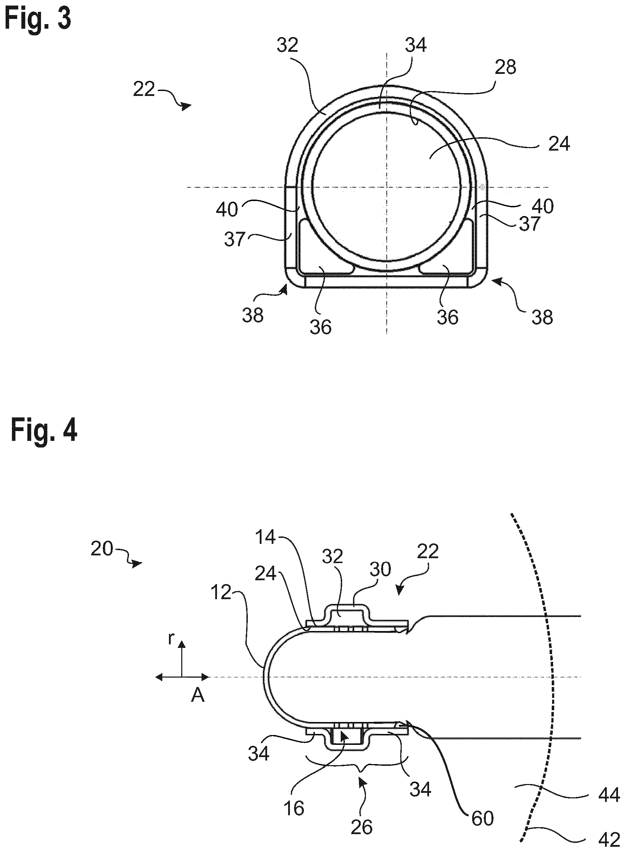

Der Diffusor 22 weist eine zentrale Aufnahmeöffnung 24 auf (siehe Figur 3), in die das Außengehäuse 14 des Gasgenerators 10 hineinragt und im gezeigten Fall auch hindurchragt. Das Längsende 12 des Gasgenerators 10, genauer gesagt, dessen ausströmöffnungslose Kappe, erstreckt sich in dieser Ausführungsform in Axialrichtung A (entlang der Längsachse des Gasgenerators 10) ein kurzes Stück über den Diffusor 22 hinaus. Dies ist auch in Figur 4 zu erkennen.

Entlang der Axialrichtung A erstreckt sich der Diffusor 22 lediglich über einen Abschnitt 26, der den Ausströmbereich 16 umfasst und der nur geringfügig breiter ist als der Ausströmbereich 16 (siehe z.B. Figur 4).

An der Innenseite 28 der Aufnahmeöffnung 24 des Diffusors 22 ist eine Gasleitfläche 30 ausgebildet, die über einen großen Anteil des Umfangs des Ausströmbereichs 16 verläuft, hier etwa über 225°.

Die Gasleitfläche 30 ist in Radialrichtung r vom Außengehäuse 14 und den Ausströmöffnungen 18 beabstandet, sodass aus den Ausströmöffnungen 18 austretendes Gas in den Zwischenraum zwischen dem Außengehäuse 14 des Gasgenerators 10 und der Gasleitfläche 30 gelangt, wenn der Gasgenerator 10 aktiviert wird. Der Raum zwischen der Gasleitfläche 30 und dem Außengehäuse 14 bildet so eine Sammelkammer 32 für das aus dem Gasgenerator 10 ausströmende Gas.

Die Sammelkammer 32 wird in axialer Richtung A von zwei Anlageflächen 34 begrenzt, die direkt am Außengehäuse 14 des Gasgenerators 10 anliegen. In diesem Beispiel verlaufen beide Anlageflächen 34 über den gesamten Umfang des Gasgenerators 10, sodass die Sammelkammer 32 in Axialrichtung A durch die beiden Anlageflächen 34 abgeschlossen ist.

Die Anlageflächen 34 sorgen auch für eine Verbindung des Diffusors 22 mit dem Gasgenerator 10. Sie liegen unter mechanischer Spannung am Außengehäuse 14 des Gasgenerators 10 an und halten den Diffusor 22 über eine Klemmkraft am Außengehäuse 14.

Der Diffusor 22 hat mehrere Auslassöffnungen 36, die strömungsmäßig mit der Sammelkammer 32 verbunden sind und aus denen das aus dem Gasgenerator 10 ausströmende Gas den Diffusor 22 und somit die Baugruppe 20 verlässt.

Die Sammelkammer 32 mündet hier an ihren beiden Umfangsenden 37 jeweils in zwei in Axialrichtung A gegenüberliegende Auslassöffnungen 36. In den hier dargestellten Beispielen steht die Fläche der Auslassöffnungen 36 jeweils senkrecht zur Axialrichtung A, sodass das Gas die Baugruppe 20 in einer Auslassrichtung R_{D} entlang der axialen Richtung A verlässt.

In dieser Ausführungsform sind insgesamt vier Auslassöffnungen 36 vorgesehen, von denen jeweils zwei entgegengesetzt gerichtet sind, sodass das Gas entlang der Axialrichtung A in zwei entgegengesetzten Auslassrichtungen R_{D} ausströmt. Gegenüber der Ausströmrichtung R_{GG} wird das ausströmende Gas in diesem Beispiel jeweils um 90° von der Radialrichtung r in die Axialrichtung A umgelenkt.

In diesem Beispiel ist die Fläche aller Auslassöffnungen 36 gleich groß gewählt. Damit ist die Baugruppe 20 schubneutral bezüglich des aus dem Gasgenerator 10 ausströmenden Gas. Die Fläche der in Axialrichtung A gegenüberliegenden Auslassöffnungen 36 kann alternativ auch unterschiedlich groß gewählt sein, sodass eine ungleichmäßige Gasverteilung erreicht wird (nicht dargestellt).

Die Auslassöffnungen 36 sind in dieser Ausführungsform dadurch gebildet, dass die Gasleitfläche 30 in einem Auslassbereich 38 einen größeren Abstand in Radialrichtung r vom Außengehäuse 14 des Gasgenerators 10 hat als im Bereich der Sammelkammer 32. Im Auslassbereich 38 ist eine Seitenwand 40, die die Gasleitfläche 30 und die benachbarte Anlagefläche 34 verbindet, unterbrochen, sodass die Auslassöffnung 36 entsteht.

In dieser Ausführungsform sind die Auslassöffnungen 36 symmetrisch zueinander in beiden gegenüberliegenden Seitenwänden 40 angeordnet.

Es sind hier zwei räumlich voneinander getrennte Auslassbereiche 38 mit jeweils zwei gegenüberliegende Auslassöffnungen 36 vorgesehen, die entlang der Umfangsrichtung um etwa 90° beabstandet sind (siehe Figuren 2 und 3).

Zwischen diesen beiden Auslassbereichen 38 ist optional eine weitere, kleine Sammelkammer 32 gebildet, es ist aber auch möglich, dass dort die Gasleitfläche 30 im Wesentlichen am Außengehäuse 14 des Gasgenerators 10 anliegt und gegebenenfalls einige der Ausströmöffnungen 18 abdeckt.

Wenn die Baugruppe 20 in einem Gassackmodul verbaut wird, wird der Gasgenerator 10 soweit in einen Gassack 42 eingeschoben, dass das Längsende 12 des Gasgenerators 10 einschließlich des Ausströmbereichs 16 und des Diffusors 22 vollständig in einem aufblasbaren Innenvolumen 44 des Gassacks 42 liegt. Dies ist in Figur 4 angedeutet.

Es ist daher nicht notwendig, dass die Anlageflächen 34 die Sammelkammer 32 gasdicht nach außen abschließen, da sämtliches aus dem Gasgenerator 10 ausströmendes Gas innerhalb des Gassacks 42 freigesetzt wird. Kleine Leckströme können daher in Kauf genommen werden.

Der Diffusor 22 wird hergestellt, indem ein Blechstreifen, beispielsweise aus einem Stahlblech, in einem Stanz-Biege-Verfahren zu einem Diffusor-Rohling umgeformt wird (nicht dargestellt). In diesem Arbeitsschritt werden sämtliche Gasleitflächen 30 und Anlageflächen 34 vorgeformt. Dieser Diffusor-Rohling wird in einem weiteren Umformschritt um den Ausströmbereich 16 des Gasgenerators 10 in Umfangsrichtung U herumgebogen, wobei die Anlageflächen 34 in Anlage an das Außengehäuse 14 des Gasgenerators 10 kommen und auch die Gasleitfläche 30 ihre endgültige Position einnehmen, sodass zwischen den Gasleitflächen 30 und dem Außengehäuse 14 die gewünschten Sammelkammer(n) 32 entstehen.

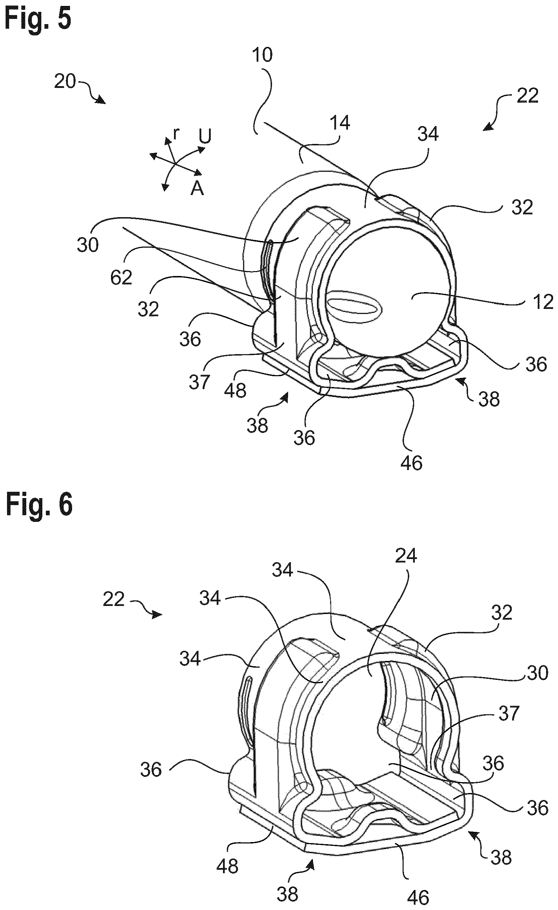

In einem Überlappungsabschnitt 46 (siehe Figuren 5 und 6) liegen Abschnitte des Diffusor-Rohlings in Radialrichtung r übereinander und sind in Kontakt miteinander. In diesem Überlappungsabschnitt 46 wird der Diffusor-Rohling an sich selbst befestigt, beispielsweise mit einem geeigneten Schweißverfahren wie etwa Laserschweißen. Die so entstandene Schweißnaht 48 fixiert den fertigen Diffusor 22 unter mechanischer Vorspannung klemmend am Gasgenerator 10. Der Diffusor-Rohling wird stoffschlüssig lediglich an sich selbst, nicht aber durch eine stoffschlüssige Verbindung am Gasgenerator 10 befestigt.

Zudem kann der Diffusor 22 durch ein geeignetes Fügeverfahren, beispielweise Crimpen, an dem Gasgenerator 10 befestigt werden. Hierfür kann der Gasgenerator 10 eine Sicke 60 (siehe Figur 4) aufweisen. Zur Verbindung des Diffusors 22 mit dem Gasgenerator 10 wird die Anlagefläche 34 des Diffusors im Bereich der Sicke 60 plastisch verformt, sodass die Anlagefläche zumindest abschnittsweise entlang des Umfangs in die Sicke 60 eingreift und eine formschlüssige Verrastung 62 entsteht (siehe Figur 6).

Alternativ kann der Diffusor 22 bereits vor dem Aufbringen auf den Ausströmbereich 16 vollständig vorgeformt sein. Ein derartiger Diffusor 22 kann ebenfalls aus einem Blechstreifen durch ein Stanz-Biege-Verfahren hergestellt sein oder aus einem Rohrelement, beispielsweise einem Stahlrohr. Vorzugsweise wird ein derartiger Diffusor 22, wie zuvor beschrieben über ein geeignetes Fügeverfahren, beispielsweise über ein Presswerkzeug auf dem Gasgenerator 10 befestigt.

Die Figuren 5 und 6 zeigen eine Baugruppe 20 gemäß einer zweiten Ausführungsform. Da sich die einzelnen Elemente nur in ihrer Form und Position, nicht aber in ihrer Funktion unterscheiden, werden die bereits eingeführten Bezugszeichen beibehalten.

In der zweiten Ausführungsform ist der Diffusor 22 so ausgebildet, dass zwei Sammelkammern 32 gebildet sind, die entlang der Umfangsrichtung U voneinander beabstandet sind und die jeweils in einen eigenen Auslassbereich 38 münden. Jeder der Auslassbereiche hat zwei Auslassöffnungen 36, die an entgegengesetzten axialen Enden des Diffusors 22 angeordnet sind und deren Fläche entlang der axialen Richtung A entgegengesetzt gerichtet ist. Entlang der Axialrichtung A ist der Auslassbereich 38 durchgängig, und die Sammelkammer 32 mündet mittig in den Auslassbereich 38. In Umfangsrichtung U zwischen den beiden Sammelkammer 32 und zwischen den beiden Auslassbereichen 38 liegt die Anlagefläche 34 direkt am Außengehäuse 14 des Gasgenerators 10 an.

Der Überlappungsabschnitt 46 verläuft in diesem Beispiel im Bereich der beiden Auslassbereiche 38, sodass in diesem Abschnitt das Metallblech, aus dem der Diffusor 22 besteht, doppellagig ist und an geeigneter Stelle, hier angedeutet durch die Schweißnaht 48, aneinander fixiert ist.

Auch in dieser Ausführungsform wird das in Radialrichtung r aus dem Ausströmbereich 16 des Gasgenerators 10 austretende Gas zunächst um 90° durch die Gasleitfläche 30 in die Sammelkammern 32 umgeleitet, in diesen zu den Auslassbereichen 38 geführt, wo es erneut um 90° umgeleitet wird und in jeweils zwei Teilgasströme aufgeteilt wird, die in der dargestellten Ausführungsform im Wesentlichen in gleicher Stärke den Diffusor 22 in entgegengesetzten Richtungen entlang der axialen Richtung A verlassen. Das Gasvolumen in den einzelnen Teilgasströmen bestimmt sich aus der Zahl der Ausströmöffnungen 18 in Bereich der einzelnen Sammelkammern 32.

Die Anzahl, Anordnung, Form und Größe der einzelnen Sammelkammern 32, Auslassbereiche 38 und Auslassöffnungen 36 liegt natürlich im Ermessen des Fachmanns und kann für den jeweiligen Gasgenerator 10 und den jeweiligen Anwendungszweck angepasst sein. Insbesondere kann die Anzahl, Anordnung, Form und Größe der einzelnen Sammelkammern 32, Auslassbereiche 38 und Auslassöffnungen 36 auch derart ausgebildet sein, dass eine ungleichmäßige Gasverteilung erfolgt

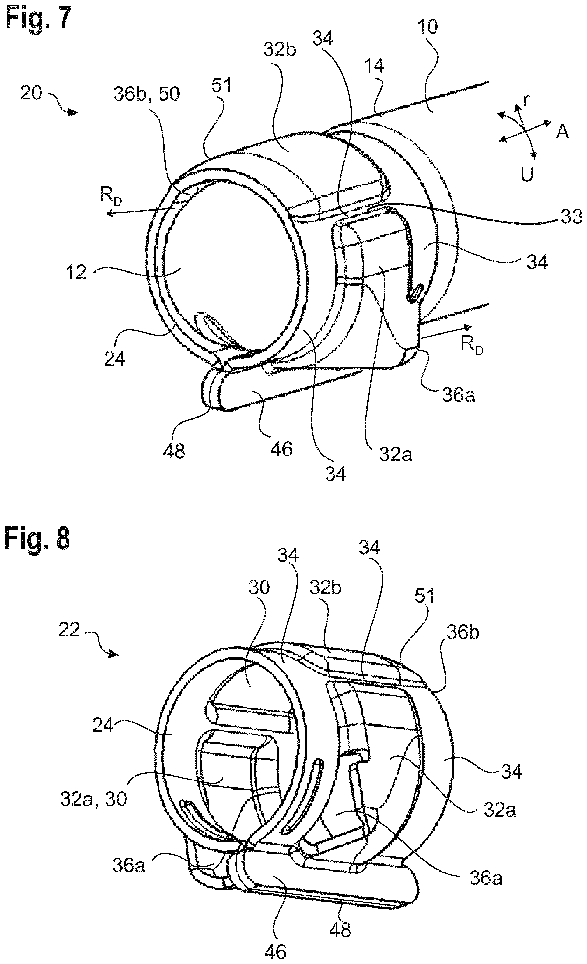

Die Figuren 7 und 8 zeigen eine dritte Ausführungsform einer Baugruppe 20. Im Unterschied zur gerade beschriebenen Ausführungsform ist im Überlappungsabschnitt 46 der Diffusor-Rohling nicht in Radialrichtung r übereinandergelegt, sondern zwei Abschnitte des Diffusor-Rohlings treffen entlang der Umfangsrichtung U aufeinander und liegen entlang der Axialrichtung A und entlang der Radialrichtung r aneinander an. Wie oben beschrieben, ist der Diffusor-Rohling in diesem Abschnitt an sich selbst fixiert, hier dargestellt durch eine Schweißnaht 48.

Ein weiterer Unterschied zu der gerade beschriebenen Ausführungsform ist, dass insgesamt drei Sammelkammern 32a, 32b vorgesehen sind, die jeweils nur in eine einzige Auslassöffnung 36a, 36b münden. Figur 7 zeigt den Diffusor 22 in einer frontalen Ansicht vom Längsende 12 des Gasgenerators 10 her, während Figur 8 den Diffusor 22 in einer rückseitigen Ansicht darstellt.

Zwei erste Sammelkammern 32a sind in Umfangsichtung U voneinander beabstandet und sind spiegelbildlich bezüglich eines Durchmessers des Gasgenerators 10 geformt. Die Gasleitfläche 30 ist in diesen beiden ersten Sammelkammern 32a so geformt, dass jeweils eine rückwärtig gerichtete Auslassöffnung 36a entsteht.

Die dritte Sammelkammer 32b liegt entlang der Umfangsrichtung U zwischen den beiden ersten beschriebenen Sammelkammern 32a. Sie weist eine einzige Auslassöffnung 36b auf, die durch einen radialen Spalt 50 zwischen dem Diffusor 22 und dem Außengehäuse 14 des Gasgenerators 10 gebildet und somit ebenfalls mit ihrer Fläche senkrecht zur Axialrichtung A ausgerichtet ist, sodass Gas in einer Auslassrichtung R_{D} parallel zur Axialrichtung A ausströmt, allerdings vorwärts gerichtet und somit entgegengesetzt zu dem aus den Auslassöffnungen 36a austretenden Gas.

Die Auslassöffnung 36b liegt an einem axialen Ende 51 der zweiten Sammelkammer 32b.

Wie in den anderen Ausführungsformen sind die Flächen der einzelnen Auslassöffnungen 36a, 36b, optional 36, sowie die Größe der Sammelkammern 32a, 32b, optional 32 so gewählt, dass die Baugruppe 20 im Wesentlichen schubneutral ist.

Alternativ ist auch hier eine ungleichmäßige Gasverteilung durch Anpassung der der Flächen einzelnen Auslassöffnungen 36a, 36b sowie der Größe der Sammelkammern 32a, 32b möglich, wobei die Größe der Sammelkammern 32a, 32b insbesondere durch die Lage des durch die Anlagefläche 34 gebildeten Trennstegs 33 anpassbar ist. Durch eine derartige prozentual ungleichmäßige Aufteilung des Gasstroms kann beispielweise eine im Wesentlichen gleichmäßige Befüllung von unterschiedlich großen, vorder- und rückseitig angeordneten Gassackkammern erreicht werden.

Am rückseitigen axialen Ende des Diffusors 22 verläuft eine Anlagefläche 34 über den gesamten Umfang des Gasgenerators 10. Eine Anlagefläche 34 am vorderseitigen axialen Ende des Diffusors 22 ist im Bereich der zweiten Sammelkammer 32b unterbrochen. Dieser Abschnitt bildet den radialen Spalt 50.

Generell wird hier das Längsende 12 als das das vordere Ende des Gasgenerators 10 betrachtet, Ausdrücke wie "vorderseitig" und "rückseitig" beziehen sich auf diese Ausrichtung.

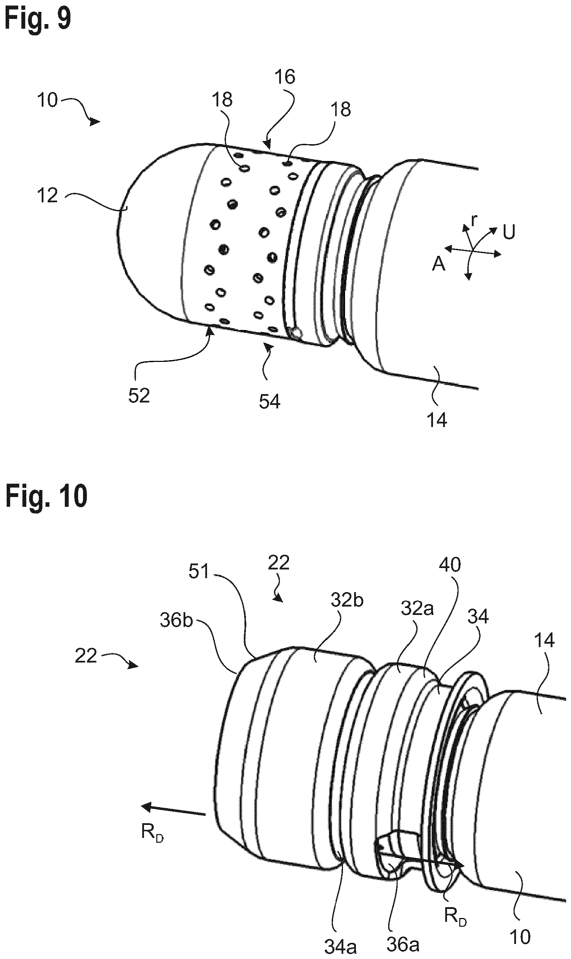

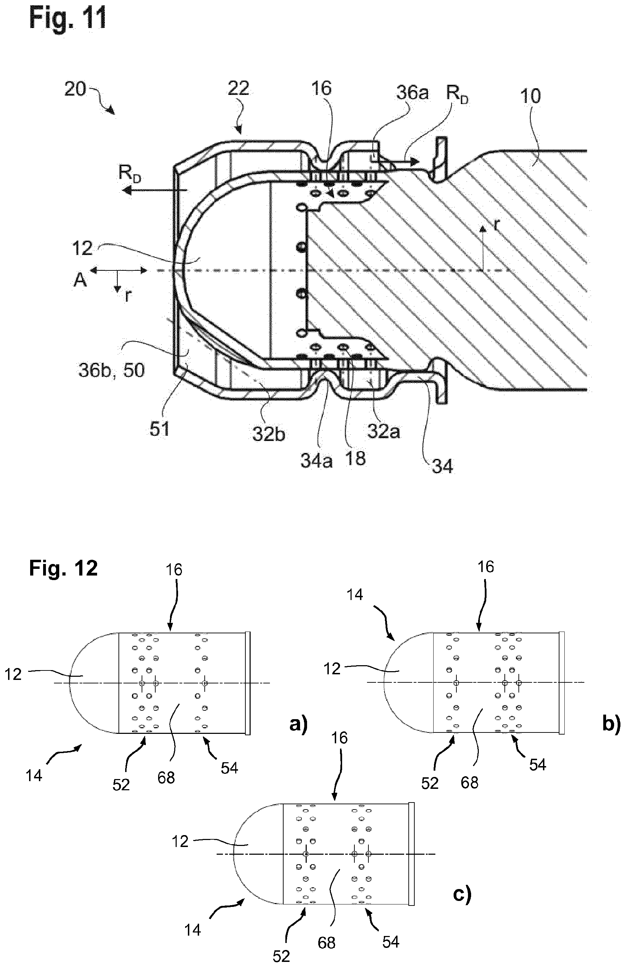

Die Figuren 10 und 11 zeigen eine Baugruppe 20 gemäß einer vierten Ausführungsform.

Auch diese Diffusor-Geometrie lässt sich aus einem streifenförmigen Blech oder einem Rohrelement, beispielsweise durch einen Stanz-Biege-Prozess herstellen. Alternativ kann der Diffusor auch als ein spiralgeschweißtes, nahtlosgezogenes oder aus dem Blech gezogenes Bauteil herstellen.

Hier kann insbesondere ein Gasgenerator 10, wie er in Figur 9 dargestellt ist, zum Einsatz kommen. Der einzige Unterschied zu dem in Figur 1 dargestellten Gasgenerator ist, dass in Axialrichtung A der Ausströmbereich 16 in zwei axiale Zonen 52, 54 unterteilt ist, die durch einen als Streifen ausgebildeten Trennbereich des Außengehäuses 14 ohne Ausströmöffnungen 18 voneinander getrennt sind. Dabei kann, insbesondere für eine ungleichmäßige Gasverteilung, vorgesehen sein, dass die Zonen 52 und 54 eine nicht symmetrische Aufteilung der Ausströmöffnungen 18 aufweisen.

Der Diffusor 22 dieser Ausführungsform weist eine mittlere Anlagefläche 34a auf, die im Trennbereich zwischen den beiden Zonen 52, 54 positioniert ist. Somit teilt die mittlere Anlagefläche 34a das Gas, das aus den beiden Zonen 52, 54 austritt, in zwei separate Teilgasströme auf.

Der Diffusor weist zwei Sammelkammern auf, die entlang der Axialrichtung A benachbart zur Anlagefläche 34 angeordnet sind. In Anlehnung an die gerade beschriebene Ausführungsform werden für diese Sammelkammern die Bezugszeichen 32a, 32b verwendet.

Jede der Sammelkammern 32a, 32b fängt das aus einer der Zonen 52, 54 austretende Gas auf.

Die rückseitige Sammelkammer 32a hat in diesem Beispiel eine einzige Auslassöffnung 36a, die durch einen offenen Abschnitt einer rückwärtig weisenden Seitenwand 40 gebildet ist und aus der ein Teilgasstrom in einer Auslassrichtung R_{D} vom Längsende 12 des Gasgenerators 10 weg gerichtet austritt.

Die vorderseitige Sammelkammer 32b hat in diesem Beispiel eine umfangsmäßig umlaufende Auslassöffnung 36b in Form eines radialen Spalts 50, aus der ein Teilgasstrom in der entgegengesetzten Richtung austritt. Diese Geometrie ist gut in Figur 11 zu erkennen.

Die Figuren 12 a) bis 12 c) zeigen jeweils das Außengehäuse 14 eines Gasgenerator 10, bei dem in Axialrichtung A der Ausströmbereich 16 jeweils in zwei axiale Zonen 52, 54 unterteilt ist, die durch einen als Streifen ausgebildeten Trennbereich 68 des Außengehäuses 14 ohne Ausströmöffnungen 18 voneinander getrennt sind.

In den Figuren 12 a) und 12 b) ist jeweils ein Außengehäuse 14 des Gasgenerator 10 dargestellt, dass für eine ungleichmäßige Gasverteilung vorgesehen ist, wobei hierfür die Zonen 52 und 54 eine nicht symmetrische Aufteilung der Ausströmöffnungen 18 aufweisen. In der Figur 12 a) sind die Ausströmöffnungen 18 dabei derart auf die Zonen 52 und 54 verteilt, dass im Bereich der Zone 52 in etwa zwei Drittel des Gasstroms und in der Zone 54 etwa ein Drittel des Gasstroms austritt. In der Figur 12 b) sind die Ausströmöffnungen 18 dabei derart auf die Zonen 52 und 54 verteilt, dass im Bereich der Zone 52 etwa ein Drittel des Gasstroms und in der Zone 54 etwa zwei Drittel des Gasstroms austritt.

In der Figur 12 c) ist ein Außengehäuse 14 des Gasgenerator 10 dargestellt, dass für eine gleichmäßige Gasverteilung vorgesehen ist, wobei hierfür die Zonen 52 und 54 eine symmetrische Aufteilung der Ausströmöffnungen 18 aufweisen, sodass jeweils etwa die Hälfte des Gasstrom in der Zone 52 und in der Zone 54 austritt.

Selbstverständlich kann der Fachmann durch eine auf den vorgesehenen Einsatzzweck der Baugruppe 20 abgestimmte Verteilung der Ausströmöffnungen 18 auf die Zonen 52 und 54 auch andere prozentuale Verhältnisse der Gasstromaufteilung erzeugen.

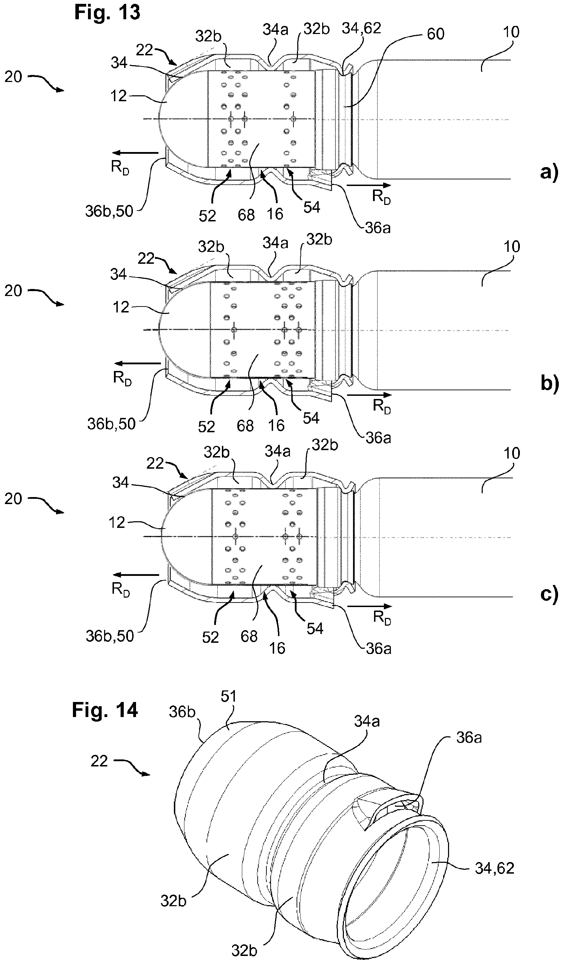

Die Figuren 13 a) bis 13 c) zeigen jeweils eine Baugruppe gemäß einer fünften Ausführungsform, wobei bei dem Außengehäuse 14 des Gasgenerators 10 der Baugruppe 20 der Ausströmbereich 16 in Axialrichtung A jeweils in zwei axiale Zonen 52, 54 unterteilt ist, die durch einen als Streifen ausgebildeten Trennbereich 68 des Außengehäuses 14 ohne Ausströmöffnungen 18 voneinander getrennt sind.

Auch der Diffusor 22 dieser Ausführungsform (siehe Figur 14) weist eine mittlere Anlagefläche 34a auf, die im Trennbereich 68 zwischen den beiden Zonen 52, 54 positioniert ist. Der Diffusor 22 weist zwei Sammelkammern 32a und 32b auf, die entlang der Axialrichtung A benachbart zur Anlagefläche 34a angeordnet sind. Jede der Sammelkammern 32a, 32b fängt das aus einer der Zonen 52, 54 austretende Gas auf. Somit teilt die mittlere Anlagefläche 34a das Gas, das aus den beiden Zonen 52, 54 austritt, in zwei separate Teilgasströme auf.

In der Figur 13 a) sind die Ausströmöffnungen 18 dabei derart auf die Zonen 52 und 54 verteilt, dass im Bereich der Zone 52 in etwa zwei Drittel des Gasstroms in die Sammelkammer 32b und in der Zone 54 etwa ein Drittel des Gasstroms in die Sammelkammer 32a austritt. In der Figur 13 b) sind die Ausströmöffnungen 18 dabei derart auf die Zonen 52 und 54 verteilt, dass im Bereich der Zone 52 etwa ein Drittel des Gasstroms in die Sammelkammer 32b und in der Zone 54 etwa zwei Drittel des Gasstroms in die Sammelkammer 32a austritt. In der Figur 13 c) sind die Ausströmöffnungen 18 symmetrisch/gleichmäßig auf die Zonen 52 und 54 verteilt, sodass jeweils etwa die Hälfte des Gasstrom in der Zone 52 in die Sammelkammer 32b und in der Zone 54 in die Sammelkammer 32a austritt.

Die rückseitige Sammelkammer 32a hat in diesem Beispiel eine einzige Auslassöffnung 36a, aus der ein Teilgasstrom in einer Auslassrichtung R_{D} vom Längsende 12 des Gasgenerators 10 weg gerichtet austritt. Die vorderseitige Sammelkammer 32b hat in diesem Beispiel eine Auslassöffnung 36b in Form eines radialen Spalts 50, aus der ein Teilgasstrom in der entgegengesetzten Richtung austritt. Der Spalt 50 ist, wie aus den Figuren 13 a) bis 13 c) hervorgeht, in dem dargestellten Beispiel in der Umfangsrichtung durch die Anlagefläche 34 an dem Längsende 12 unterbrochen.

Auch diese Diffusor-Geometrie lässt sich aus einem streifenförmigen Blech oder einem Rohrelement, beispielsweise durch einen Stanz-Biege-Prozess herstellen. Alternativ kann auch dieser Diffusor als ein spiralgeschweißtes, nahtlosgezogenes oder aus dem Blech gezogenes Bauteil hergestellt sein.

Der Vorteil einer solchen Baugruppe 20 gemäß der fünften Ausführungsform ist, dass der Diffusor 22 als ein Standardbauteil ausgelegt werden kann: Eine Anpassung der prozentualen Gasverteilung, die insbesondere abhängig vom vorgesehenen Einsatzzweck der Baugruppe 20 ist, kann auf einfache und kostengünstige Weise durch eine Anpassung des Außengehäuses 14 hervorgerufen werden. Die Anpassung des Außengehäuses 14 erfolgt hierbei vorzugsweise durch eine Anpassung der Anzahl, der den jeweiligen Zonen 52 und 54 zugeordneten Ausströmöffnungen 18 in dem Ausströmbereich 16 des Außengehäuses 14 des Gasgenerators 10.

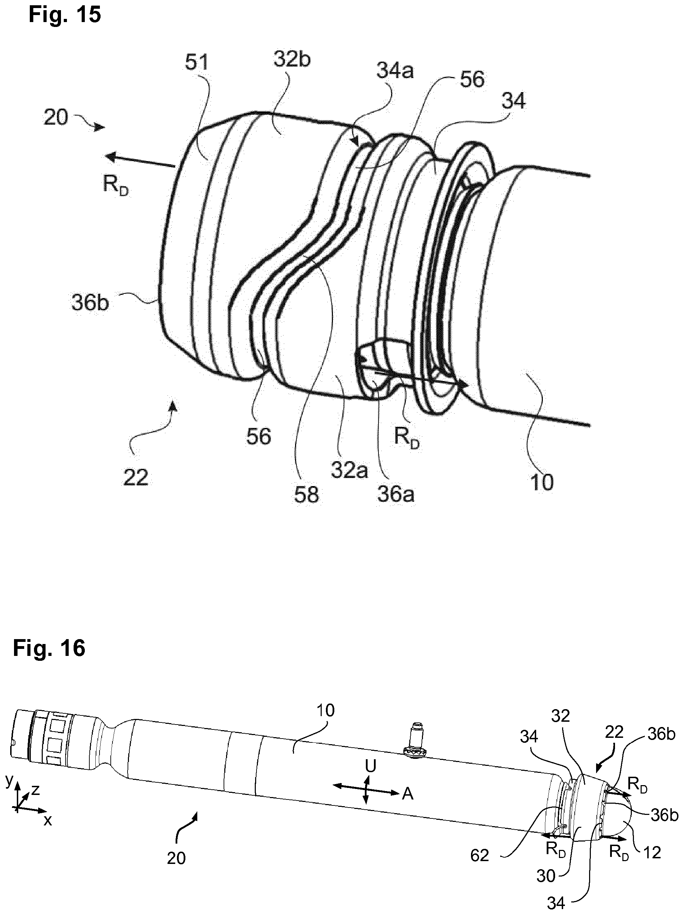

Figur 15 zeigt eine sechste Ausführungsform einer Baugruppe 20. Im Unterschied zu gerade beschriebenen Ausführungsform ist die mittlere Anlagefläche 34a wendelförmig ausgebildet, sodass die axiale Breite der beiden Sammelkammern 32a, 32b entlang der Umfangsrichtung U variiert.

Die Wendelform der mittleren Anlagefläche 34 wird hier erreicht, indem diese Anlagefläche 34a zwei nur entlang der Umfangsrichtung U verlaufende erste Abschnitte 56 aufweist, die entlang der Axialrichtung A versetzt zueinander angeordnet sind, sowie zwei zweite Abschnitte 58, die schräg zur Axialrichtung A und zur Umfangsrichtung U verlaufen und die die ersten Abschnitte 56 miteinander verbinden. Durch diese Gestaltung lässt sich die Größe der einzelnen Sammelkammern 32a, 32b, die die Stärke der einzelnen Teilgasströme bestimmen, festlegen. Diese Geometrie lässt sich sowohl mit einem Gasgenerator nach Figur 1 als auch mit einem Gasgenerator noch Figur 9 verwenden.

Auch bei dieser Ausführungsform weist die rückwärtige Sammelkammer 32a eine rückwärtigen gerichtete Auslassöffnung 36a auf, während die vorderseitige Sammelkammer 32b eine vorwärts gerichtete Auslassöffnung 36b besitzt, die in Form eines radialen Spalts am vorderen axialen Ende 51 der Sammelkammer 32b in Umfangsrichtung U um den Gasgenerator 10 umläuft.

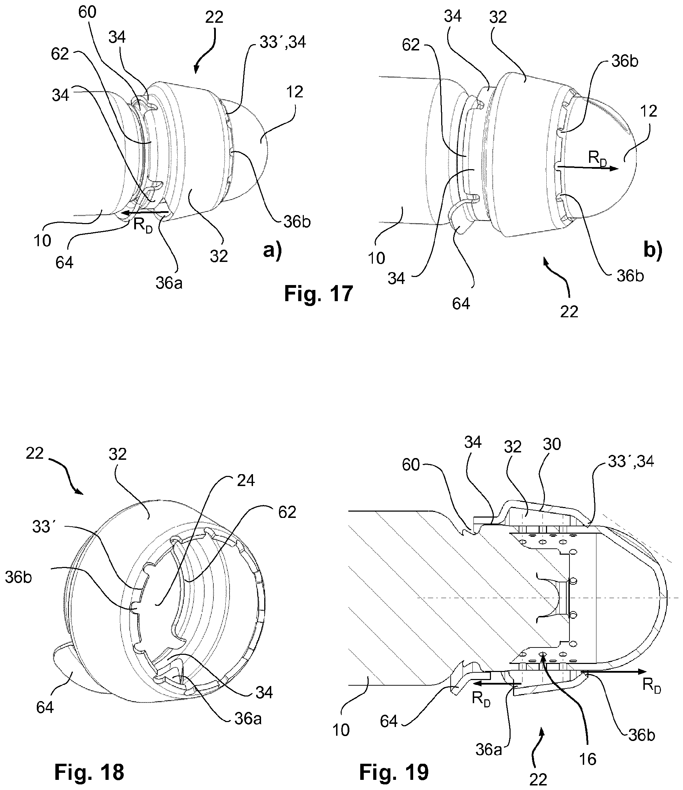

Die Figuren 16 bis 21 zeigen eine Baugruppe 20 gemäß einer siebten Ausführungsform. Figur 16 zeigt einen Gasgenerator gemäß Figur 1 auf dessen Längsende 12 ein selbstverrastender Diffusor 22 aufgesetzt ist. Ähnlich zur ersten Ausführungsform erstreckt sich das Längsende 12 des Gasgenerators 10, genauer gesagt, dessen ausströmöffnungslose Kappe, auch in dieser sechsten Ausführungsform in Axialrichtung A ein kurzes Stück über den Diffusor 22 hinaus. Dies ist insbesondere in den Figuren 17, 19 und 21 gut zu erkennen.

Der selbstverrastende Diffusor 22 wird vorzugsweise aus einem Federstahl hergestellt. In der dargestellten Ausführungsform erstreckt sich die Gasleitfläche 30 über den gesamten Umfang. Vorderseitig weist der Diffusor 22 mehrere hier gleichmäßig über den Umfang U verteilte Auslassöffnungen 36b auf. Die Auslassöffnungen 36b sind durch Trennstege 33'getrennt, die zudem die vorderseitigen Anlageflächen 34 bilden (siehe Figuren 17b und 18).

Rückseitig weist der Diffusor 22 in der dargestellten Ausführungsform eine Auslassöffnung 36a auf, die durch eine abschnittsweise Öffnung im rückseitigen Bereich der Gasleitfläche 30 gebildet wird (siehe Figuren 17a und 19). An die Anlagefläche 34, die im Bereich der Auslassöffnung 36a angeordnet ist, schließt sich in der dargestellten Ausführungsform ein optionales Leitelement 64 an. Durch ein derartiges Leitelement 64 kann die Auslassrichtung R_{D} des Gases in eine Auslassrichtung R_{D} umgelenkt werden (siehe Figur 19).

Die rückseitige Anlagefläche 34 des Diffusors ist in Umfangsrichtung U durch Trennausnehmungen 66 in mehrere Abschnitte unterteilt. In der Ausführungsform gemäß der Figuren 16 bis 21 umfasst die rückseitige Anlagefläche 64 vier Abschnitte. An zwei dieser Abschnitte der Anlagefläche 34, die hier benachbart zu dem Abschnitt der Anlagefläche 34 im Bereich der Auslassöffnung 36a angeordnet sind, schließen sich Rastelemente 62 an, die in einem montierten Zustand des Diffusors 22 in die Sicke 60 des Gasgenerators 10 eingreifen.

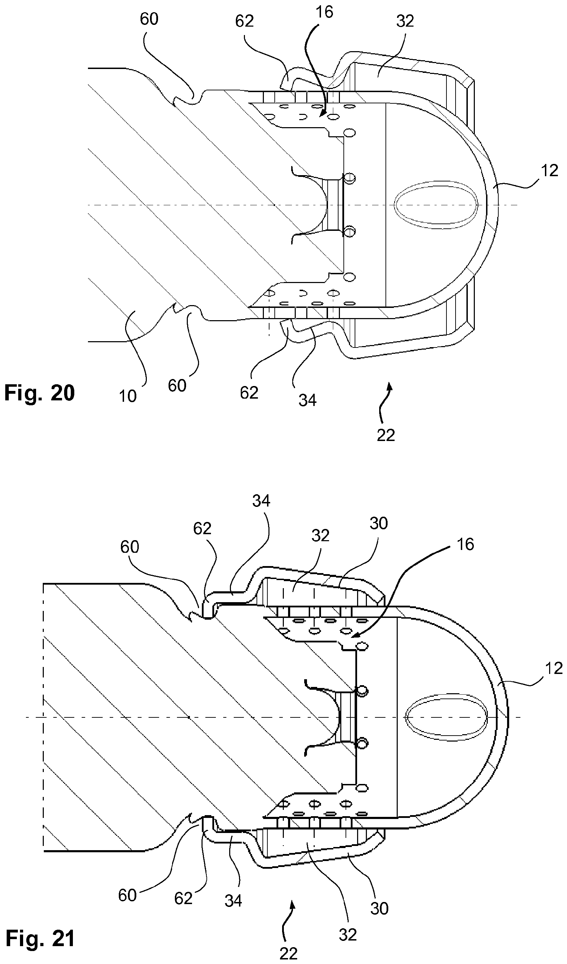

Die Figuren 20 und 21 zeigen einen Längsschnitt durch die Baugruppe 20 in einer x-z-Ebene in verschiedenen Zeitpunkten der Montage des Diffusors 22 und des Gasgenerators 10.

Figur 20 zeigt die Baugruppe 20 während der Diffusor 20 auf den Gasgenerator 22 aufgeschoben wird. Die Anlageflächen 34 mit den Rastelementen 62 werden beim Aufschieben des Diffusors 22 in radialer Richtung r nach außen gebogen. Dieses Aufbiegen der Rastelemente 62 wird insbesondere durch die Trennausnehmungen 66 im Bereich der rückseitigen Anlagefläche 34 ermöglicht.

Figur 21 zeigt die Baugruppe 20 nach Beendigung der Montage. Dabei ist deutlich zu erkennen, dass die Rastelemente 62 in die Sicke 60 des Gasgenerators 10 eingerastet sind und der Diffusor 22 dadurch auf einfache Weise an dem Gasgenerator 10 verriegelt ist. Zur Fixierung des Diffusors 22 an dem Gasgenerator 10 können zudem die Trennstege 33', die die vorderseitige Anlageflächen 34 bilden, derart ausgebildet sein, dass diese bei der Montage des Diffusors ebenfalls in radialer Richtung r zumindest leicht nach außen gebogen werden. Dadurch kann durch die Trennstege 33' aufgrund der Eigenspannung des Materials im montierten Zustand im Bereich der vorderseitigen Anlageflächen 34 eine zur Mittelachse des Gasgenerators 10 gerichtete Anpresskraft erzeugt werden. Selbstverständlich kann der Diffusor 22 neben der Selbstverrastung zusätzlich beispielsweise durch Verpressen oder Verschweißen an dem Gasgenerator 10 fixiert werden.

Sämtliche Merkmale der einzelnen Ausführungsformen lassen sich natürlich im Ermessen des Fachmanns im Rahmen des Schutzumfangs der Patentansprüche miteinander kombinieren oder gegeneinander austauschen, wobei stets der gewünschte Anwendungszweck und die Geometrie des verwendeten Gasgenerators bei der Wahl der Form des Diffusors zu berücksichtigen sind.

## Patentansprüche

1. Baugruppe (20) aus einem langgestreckten Gasgenerator (10), der ein Au-ßengehäuse (14) mit am Umfang (U) verteilten Ausströmöffnungen (18) hat, die einen Ausströmbereich (16) und eine Ausströmrichtung (R_{GG}) definieren, und aus einem schellenförmigen, den Ausströmbereich (16) umschließenden Diffusor (22), insbesondere aus einem umgeformten Blechring oder Rohrelement, wobei der Diffusor (22) eine zentrale Aufnahmeöffnung (24) aufweist, in die das Außengehäuse (14) hineinragt, sodass der Diffusor (22) einen axialen Abschnitt des Außengehäuses (14), welcher den Ausströmbereich (16) umfasst, umfangsmäßig umschließt, wobei an der die Aufnahmeöffnung (24) begrenzenden Innenseite (28) des Diffusors (22) zumindest eine Anlagefläche (34; 34a) und zumindest eine Gasleitfläche (30) vorgesehen sind, wobei die Anlagefläche (34; 34a) direkt am Außengehäuse (14) des Gasgenerators (10) anliegt, wobei der Ausströmbereich (16) des Gasgenerators (10) in zumindest zwei Zonen (52, 54) unterteilt ist, die durch einen Trennbereich (68) des Außengehäuses (14) ohne Ausströmöffnungen (18) voneinander getrennt sind, wobei die Anlagefläche (34a) des Diffusors (22) im Trennbereich (68) zwischen den Zonen (52, 54) positioniert ist und wobei die wenigstens eine Anlagefläche (34a) den aus dem Gasgenerator (10) austretenden Gasstrom in zumindest zwei Teilströme aufteilt, insbesondere wobei die Anlagefläche (34a) wendelförmig um das Außengehäuse (14) oder nur in Umfangsrichtung (U) um das Außengehäuse (14) verläuft, und die Gasleitfläche (30) radial vom Außengehäuse (14) unter Bildung von zumindest zwei Sammelkammern (32; 32a, 32b) beabstandet ist, in die aus dem Ausströmbereich (16) ausströmendes Gas einströmt, wobei die Sammelkammern (32; 32a, 32b) jeweils in wenigstens eine Auslassöffnung (36; 36a, 36b) münden, durch die Gas den Diffusor (22) in einer Auslassrichtung (R_{D}) quer zur Ausströmrichtung (R_{GG}) aus dem Gasgenerator (10) verlässt, wobei die zumindest zwei Auslassöffnungen (36; 36a, 36b) entgegengesetzt gerichtet sind.

2. Baugruppe (20) nach Anspruch 1, **dadurch gekennzeichnet, dass** die Auslassrichtung (R_{D}) axial bezogen auf die Längsachse des Gasgenerators (10) verläuft.

3. Baugruppe (20) nach einem der vorhergehenden Ansprüche, **dadurch gekennzeichnet, dass** angrenzend an die Auslassöffnung (36; 36a) die Gasleitfläche (30) radial weiter außen liegt als in der zumindest einen zugeordneten Sammelkammer (32; 32a) entfernt von der Auslassöffnung (36; 36a).

4. Baugruppe (20) nach einem der vorhergehenden Ansprüche, **dadurch gekennzeichnet, dass** die Anlagefläche(n) (34; 34a) die Sammelkammer(n) (32; 32a; 32b) in axialer Richtung (A) und/oder in Umfangsrichtung (U) begrenzen.

5. Baugruppe (20) nach einem der vorhergehenden Ansprüche, **dadurch gekennzeichnet, dass** zumindest eine Sammelkammer (32; 32a) vorgesehen ist, die in Umfangsrichtung (U) nicht durchgehend verläuft und die an ihren beiden Umfangsenden (37) in zumindest eine Auslassöffnung (36; 36a) mündet.

6. Baugruppe (20) nach einem der vorhergehenden Ansprüche, **dadurch gekennzeichnet, dass** eine Sammelkammer (32b) vorgesehen ist, die an einem axialen Ende (51) in eine Auslassöffnung (36b) mündet.

7. Baugruppe (20) nach Anspruch 6, **dadurch gekennzeichnet, dass** die Auslassöffnung (36b) durch einen radialen Spalt (50) zwischen dem Außengehäuse (14) und der Innenseite des Diffusors (22) gebildet ist.

8. Baugruppe (20) nach einem der vorhergehenden Ansprüche, **dadurch gekennzeichnet, dass** eine um den gesamten Umfang des Gasgenerators (10) umlaufende Anlagefläche (34a) vorgesehen ist, die zwei nur entlang der Umfangsrichtung (U) verlaufende erste Abschnitte (56) und zwei schräg zur Umfangsrichtung (U) und zur axialen Richtung (A) verlaufende zweite Abschnitte (58) aufweist, die die ersten Abschnitte (56) verbinden.

9. Baugruppe (20) nach einem der vorhergehenden Ansprüche, **dadurch gekennzeichnet, dass** der Ausströmbereich (16) an einem Längsende (12) des Gasgenerators (10) vorgesehen ist.

10. Baugruppe nach einem der vorherigen Ansprüche, **dadurch gekennzeichnet, dass** die Auslassöffnungen (36b) über den Umfang (U) verteilt und durch Trennstege (33') getrennt sind, wobei die Trennstege (33') zumindest teilweise die Anlagefläche(n) (34, 34a) bilden, die die Sammelkammer (32) in axialer Richtung (A), insbesondere hin zu einem Längsende (12) des Gasgenerators (10), begrenzen.

11. Baugruppe (20) nach einem der vorherigen Ansprüche, **dadurch gekennzeichnet, dass** der Diffusor (22) zumindest ein Rastelement (62) umfasst, wobei das Rastelement (62) zur Befestigung und der Festlegung des Diffusors (22) auf dem Gasgenerator (10) insbesondere in eine Sicke (60) eingreifen kann.

12. Baugruppe nach Anspruch 11, **dadurch gekennzeichnet, dass** der Diffusor (22) aus Federstahl, insbesondere einem zwischenstufenvergüteten Federstahl, hergestellt ist.

13. Gassackmodul mit einem Gassack (42) und einer Baugruppe (20) nach einem der vorhergehenden Ansprüche, **dadurch gekennzeichnet, dass** der Diffusor (22) vollständig in einem aufblasbaren Innenvolumen (44) des Gassacks (42) angeordnet ist.

14. Verfahren zur Montage einer Baugruppe (20) nach einem der Ansprüche 1 bis 13, mit den folgenden Schritten:
- ein einstückiger Diffusor (22) wird aus einstückigen geschlossenen Rohrelement oder aus einem Metallblech gefertigt, wobei alle Anlageflächen (34; 34a) und alle Gasleitflächen (30) vorgeformt werden,
- der Diffusor (22) wird auf den Ausströmbereich (16) des Gasgenerators geschoben, und eine Anlagefläche (34) des Diffusors (22) wird im Bereich einer Sicke (60) des Gasgenerators plastisch verformt, insbesondere durch ein Presswerkzeug, sodass die Anlagefläche (34) zumindest abschnittsweise entlang des Umfangs (U) in die Sicke (60) eingreift und eine formschlüssige Verrastung (62) entsteht.

15. Verfahren zur Montage einer Baugruppe (20) nach einem der Ansprüche 1 bis 13, mit den folgenden Schritten:
- ein einstückiger Diffusor (22) wird aus einem geschlossenen Rohrelement oder aus einem Metallblech gefertigt, wobei alle Anlageflächen (34; 34a), alle Gasleitflächen (30) und alle Rastelemente (62) vorgeformt werden,
- der Diffusor (22) wird auf den Ausströmbereich (16) des Gasgenerators (10) geschoben, sodass die Rastelemente (62) zumindest abschnittsweise entlang des Umfangs (U) in die Sicke (60) des Gasgenerators (10) eingreifen und eine formschlüssige Verrastung entsteht.

## Claims

1. An assembly (20) of an elongate inflator (10) having an outer housing (14) with outflow openings (18) distributed along the circumference (U) which define an outflow area (16) and an outflow direction (R_{GG}), and of a clamp-type diffusor (22) enclosing the outflow area (16), specifically made of a formed sheet ring or tube element, wherein the diffusor (22) includes a central receiving opening (24) into which the outer housing (14) protrudes so that the diffusor (22) circumferentially encloses an axial portion of the outer housing (14) which comprises the outflow area (16), wherein on the inner side (28) of the diffusor (22) delimiting the receiving opening (24) at least one bearing surface (34; 34a) and at least one gas guiding surface (30) are provided, wherein the bearing surface (34; 34a) bears directly against the outer housing (14) of the inflator (10), wherein the outflow area (16) of the inflator (10) is divided into at least two zones (52, 54) which are separated from each other by a separation area (68) of the outer housing (14) without outflow openings (18), wherein the bearing surface (34a) of the diffusor (22) is positioned in the separation area (68) between the zones (52, 54), and wherein the at least one bearing surface (34a) divides the gas flow exiting the gas generator (10) into at least two partial flows, specifically wherein the bearing surface (34a) extends spirally around the outer housing (14) or only in the circumferential direction (U) around the outer housing (14), and the gas guiding surface (30) is radially spaced apart from the outer housing (14) while forming at least two collecting chambers (32; 32a, 32b) into which gas flowing out of the outflow area (16) flows, wherein each of the collecting chambers (32; 32a, 32b) opens into at least one outlet opening (36; 36a, 36b) through which gas exits the diffusor (22) from the inflator (10) in an outlet direction (R_{D}) at right angles to the outflow direction (R_{GG}), wherein the at least two outlet openings (36; 36a, 36b) are directed in opposite directions.

2. The assembly (20) according to claim 1, **characterized in that** the outlet direction (R_{D}) extends axially in relation to the longitudinal axis of the inflator (10).

3. The assembly (20) according to any one of the preceding claims, **characterized in that**, adjacent to the outlet opening (36; 36a), the gas guiding surface (30) is located radially further outside than in the at least one associated collecting chamber (32; 32a) remote from the outlet opening (36; 36a).

4. The assembly (20) according to any one of the preceding claims, **characterized in that** the bearing surface(s) (34; 34a) delimit(s) the collecting chamber(s) (32; 32a, 32b) in the axial direction (A) and/or in the circumferential direction (U).

5. The assembly (20) according to any one of the preceding claims, **characterized in that** at least one collecting chamber (32; 32a) is provided which does not extend continuously in the circumferential direction (U) and which, at its two circumferential ends (37), opens into at least one outlet opening (36; 36a).

6. The assembly (20) according to any one of the preceding claims, **characterized in that** a collecting chamber (32b) is provided which opens at an axial end (51) into an outlet opening (36b).

7. The assembly (20) according to claim 6, **characterized in that** the outlet opening (36b) is formed by a radial gap (50) between the outer housing (14) and the inner side of the diffusor (22).

8. The assembly (20) according to any one of the preceding claims, **characterized in that** a bearing surface (34a) peripheral around the entire circumference of the inflator (10) is provided which includes two first portions (56) extending only along the circumferential direction (U) and two second portions (58) extending inclined to the circumferential direction (U) and to the axial direction (A), the second portions (58) connecting the first portions (56).

9. The assembly (20) according to any one of the preceding claims, **characterized in that** the outflow area (16) is provided at a longitudinal end (12) of the inflator (10).

10. The assembly according to any one of the preceding claims, **characterized in that** the outlet openings (36b) are distributed over the circumference (U) and are separated by separation webs (33'), wherein the separation webs (33') at least partially form the bearing surface(s) (34, 34a) which delimit(s) the collecting chamber (32) in the axial direction (A), specifically toward a longitudinal end (12) of the inflator (10).

11. The assembly (20) according to any one of the preceding claims, **characterized in that** the diffusor (22) comprises at least one detent element (62), wherein the detent element (62) can engage specifically in a bead (60) for fastening and fixing the diffusor (22) on the inflator (10).

12. The assembly according to claim 11, **characterized in that** the diffusor (22) is manufactured of spring steel, specifically an austempered spring steel.

13. An airbag module comprising an airbag (42) and an assembly (20) according to any one of the preceding claims, **characterized in that** the diffusor (22) is arranged completely in an inflatable inner volume (44) of the airbag (42).

14. A method of mounting an assembly (20) according to any one of the claims 1 to 13, comprising the following steps:
- a one-piece diffusor (22) is manufactured of a one-piece closed tube element or of a sheet metal, wherein all bearing surfaces (34; 34a) and all gas guiding surfaces (30) are preformed,
- the diffusor (22) is slipped onto the outflow area (10) of the inflator and a bearing surface (34) of the diffusor (22) is plastically deformed in the area of a bead (60) of the inflator, specifically by a pressing tool, so that at least portions of the bearing surface (34) engage in the bead (60) along the circumference (U) and a positive locking (62) is formed.

15. A method of mounting an assembly (20) according to any one of the claims 1 to 13, comprising the following steps:
- a one-piece diffusor (22) is manufactured of a closed tube element or of a sheet metal, wherein all bearing surfaces (34; 34a), all gas guiding surfaces (30) and all detent elements (62) are preformed,
- the diffusor (22) is slipped onto the outflow area (16) of the inflator (10) so that at least portions of the detent elements (62) engage in the bead (60) of the inflator (10) along the circumference (U) and a positive locking is formed.

## Revendications

1. Ensemble (20) constitué d'un générateur de gaz (10) allongé, qui a un boîtier extérieur (14) avec des ouvertures de sortie (18) réparties sur la périphérie (U), qui définissent une zone d'écoulement (16) et une direction de sortie (RGG), et d'un diffuseur (22) en forme de collier, entourant la zone d'écoulement (16), en particulier d'un anneau de tôle emboutie ou d'un élément tubulaire, pour lequel le diffuseur (22) présente une ouverture de réception centrale (24) dans laquelle le boîtier extérieur (14) fait saillie, de sorte que le diffuseur (22) entoure circonférentiellement une section axiale du boîtier extérieur (14) laquelle comprend la zone d'écoulement (16), pour lequel au moins une surface d'appui (34 ; 34a) et au moins une surface de guidage de gaz (30) sont prévues sur le côté intérieur (28) du diffuseur (22) délimitant l'ouverture de réception (24), pour lequel la surface d'appui (34 ; 34a) s'appuie directement sur le boîtier extérieur (14) du générateur de gaz (10), pour lequel la zone d'écoulement (16) du générateur de gaz (10) est divisée en au moins deux zones (52, 54), lesquelles sont séparées l'une de l'autre par une zone de séparation (68) du boîtier extérieur (14) sans ouvertures de sortie (18), pour lequel la surface d'appui (34a) du diffuseur (22) est positionnée dans la zone de séparation (68) entre les zones (52, 54) et pour lequel l'au moins une surface d'appui (34a) divise le flux de gaz sortant du générateur de gaz (10) en au moins deux flux partiels, en particulier, pour lequel la surface d'appui (34a) s'étend en hélice autour du boîtier extérieur (14) ou seulement dans la direction périphérique (U) autour du boîtier extérieur (14), et la surface de guidage de gaz (30) est espacée radialement du boîtier extérieur (14) en formant au moins deux chambres collectrices (32 ; 32a, 32b) dans lesquelles le gaz sortant s'écoule de la zone d'écoulement (16), pour lequel les chambres collectrices (32 ; 32a, 32b) débouchent chacune dans au moins un orifice de sortie (36 ; 36a, 36b), à travers lequel le gaz quitte le diffuseur (22) dans une direction de sortie (RD) transversale à la direction d'écoulement (RGG) à partir du générateur de gaz (10), pour lequel les au moins deux orifices de sortie (36 ; 36a, 36b) sont orientés en sens inverse.

2. Ensemble (20) selon la revendication 1, **caractérisé en ce que** la direction de sortie (RD) s'étend axialement par rapport à l'axe longitudinal du générateur de gaz (10).

3. Ensemble (20) selon l'une quelconque des revendications précédentes, **caractérisé en ce que**, adjacente à l'ouverture de sortie (36 ; 36a), la surface de guidage de gaz (30) est située radialement plus à l'extérieur que dans ladite au moins une chambre collectrice associée (32 ; 32a) éloignée de l'ouverture de sortie (36 ; 36a).

4. Ensemble (20) selon l'une des revendications précédentes, **caractérisé en ce que** la ou les surfaces d'appui (34 ; 34a) délimitent la ou les chambres collectrices (32 ; 32a ; 32b) dans la direction axiale (A) et/ou dans la direction circonférentielle (U).

5. Ensemble (20) selon l'une des revendications précédentes, **caractérisé en ce qu'**il est prévu au moins une chambre collectrice (32 ; 32a) qui ne s'étend pas continuement dans la direction périphérique (U) et qui débouche à ses deux extrémités périphériques (37) dans au moins un orifice de sortie (36 ; 36a).

6. Ensemble (20) selon l'une des revendications précédentes, **caractérisé en ce qu'**il est prévu une chambre collectrice (32b) qui débouche à une extrémité axiale (51) dans un orifice de sortie (36b).

7. Ensemble (20) selon la revendication 6, **caractérisé en ce que** l'ouverture de sortie (36b) est formée par un espace radial (50) entre le boîtier extérieur (14) et la face intérieure du diffuseur (22).

8. Ensemble (20) selon l'une des revendications précédentes, **caractérisé en ce qu'**il est prévu une surface d'appui (34a) qui fait le tour de toute la périphérie du générateur de gaz (10), laquelle comporte deux premiers tronçons (56) qui s'étendent uniquement le long de la direction périphérique (U) et deux seconds tronçons (58) qui s'étendent obliquement par rapport à la direction périphérique (U) et par rapport à la direction axiale (A), lesquelles relient les premiers tronçons (56).

9. Ensemble (20) selon l'une des revendications précédentes, **caractérisé en ce que** la zone d'écoulement (16) est prévue à une extrémité longitudinale (12) du générateur de gaz (10).

10. Ensemble selon l'une des revendications précédentes, **caractérisé en ce que** les orifices de sortie (36b) sont répartis sur la périphérie (U) et séparés par des séparateurs (33'), pour lequel les séparateurs (33') forment au moins partiellement la ou les surfaces d'appui (34, 34a), qui délimitent la chambre collectrice (32) dans la direction axiale (A), notamment vers une extrémité longitudinale (12) du générateur de gaz (10).

11. Ensemble (20) selon l'une des revendications précédentes, **caractérisé en ce que** le diffuseur (22) comprend au moins un élément d'encliquetage (62), pour lequel l'élément d'encliquetage (62) peut s'engager notamment dans une moulure (60) pour la fixation et l'immobilisation du diffuseur (22) sur le générateur de gaz (10).

12. Ensemble selon la revendication 11, **caractérisé en ce que** le diffuseur (22) est fabriqué en acier à ressort, en particulier en acier à ressort à trempe intermédiaire.

13. Module airbag comprenant un coussin gonflable (42) et un ensemble (20) selon l'une des revendications précédentes, **caractérisé en ce que** le diffuseur (22) est disposé entièrement dans un volume intérieur gonflable (44) du coussin gonflable (42).

14. Procédé d'assemblage d'un ensemble (20) selon l'une des revendications 1 à 13, comprenant les étapes suivantes :
- un diffuseur monobloc (22) est fabriqué à partir d'un élément tubulaire fermé monobloc ou d'une tôle métallique, pour lequel toutes les surfaces d'appui (34 ; 34a) et toutes les surfaces de guidage des gaz (30) sont préformées,
- le diffuseur (22) est poussé sur la zone d'écoulement (16) du générateur de gaz, et une surface d'appui (34) du diffuseur (22) est déformée plastiquement dans la zone d'une moulure (60) du générateur de gaz, en particulier avec un outil de presse, de sorte que la surface d'appui (34) s'engage au moins par sections le long de la périphérie (U) dans la moulure (60) et qu'il se forme un encliquetage (62) par complémentarité de forme.

15. Procédé de montage d'un ensemble (20) selon l'une des revendications 1 à 13, comprenant les étapes suivantes :
- un diffuseur (22) d'une seule pièce est fabriqué à partir d'un élément tubulaire fermé ou d'une tôle métallique, pour lequel toutes les surfaces d'appui (34 ; 34a), toutes les surfaces de guidage des gaz (30) et tous les éléments d'encliquetage (62) sont préformés,
- le diffuseur (22) est poussé sur la zone d'écoulement (16) du générateur de gaz (10), de sorte que les éléments d'encliquetage (62) s'engagent au moins par sections le long de la périphérie (U) dans la moulure (60) du générateur de gaz (10) et qu'il en résulte un encliquetage par complémentarité de forme.
